# EUROPEAN PATENT APPLICATION

(11) **EP 0 585 508 A1**
(43) Date of publication of application: **09.03.1994**
(21) Application number: 92830467.4
(22) Date of filing: 03.09.1992
(51) Int. Cl.: B25J 1/00, B65G 47/91

(54) **A device for gripping sheet-like workpieces**

(71) Applicant: SAPRI S.p.A., I-40060 Toscanella Di Dozza (Bologna) (IT)
(72) Inventor: Sartorio, Franco, I-10129 Torino (IT); Berti, Pasquale, I-48018 Faenza (Ravenna) (IT)
(74) Representative: Quinterno, Giuseppe

(57) **Abstract**

The device comprises a base (24) having a first group of pick-up sucker members and carrying at least one pair of projecting arms (26, 28) provided with a second and a third group of pick-up members (32, 34). At least one of the arms (28) is movable between two operative positions, in the first of which the two arms (26, 28) are substantially parallel to each other and in the second of which the arms are substantially aligned with each other.

## Description

The present invention relates to a device for picking up plate-like pieces, particularly for unloading pieces of sheet metal cut by a laser machine.

A very wide range of pick-up devices provided with a plurality of pick-up sucker members connected to suction means is known for moving sheets or plates. When sheet metal is cut, particularly with laser machines, it is necessary to pick up pieces of various shapes and dimensions automatically. In such cases it is highly desirable to have available a single pick-up device which can pick up pieces having dimensions of the order of a few centimetres per side or diameter up to sheets with dimensions of the order of metres, or strips with lengths of the order of 1.5-2 metres and widths of the order of about 10cm.

In principle it should be possible to collect pieces of different shapes and dimensions with a single pick-up device if the latter had a pick-up surface with a shape corresponding to the envelope of the surfaces of the various pieces to be picked up.

On the other hand, it is necessary to minimise the dimensions of the pick-up device for reasons of cost, weight and bulk. The weight of the pick-up device merits particular attention in view of the fact that the acceleration and velocity of movement of the pick-up device are dependent on its weight and it is unacceptable for the unloading of the pieces to involve a longer time than the cutting time.

A pick-up device is known from US-4,767,143 which has a base and four pivoted arms disposed in a cross and projecting radially from the base. The arms carry respective suction cups which are movable along the arms and controlled by actuating means.

The object of the present invention is to provide a light, compact device which enables pieces with widely varying shapes and dimensions to be handled.

According to the invention, this object is achieved by the provision of a device for picking up plate-like pieces, including a plurality of pick-up sucker members connected to suction means, characterised in that it includes a base provided with a first group of pick-up members and in that the base carries at least one pair of projecting arms provided with a second group and a third group of pick-up members, at least one of the arms being movable between two operative positions in the first of which the two arms are substantially parallel and in the second of which the arms are substantially aligned with each other.

Further characteristics and advantages of the invention will become apparent from the detailed description which follows, given with reference to the appended drawings, provided purely by way of non-limiting example, in which:
Figure 1 is a perspective view of a device of the invention coupled to a laser machine,
Figure 2 is a perspective view of the device indicated by the arrow II in Figure 1, on an enlarged scale,
Figure 3 is a perspective view illustrating the device of Figure 2 in a different working configuration,
Figures 4 and 5 are perspective views taken on the arrows IV and V of Figure 2, and
Figure 6 is a section taken on the line VI-VI of Figure 3.

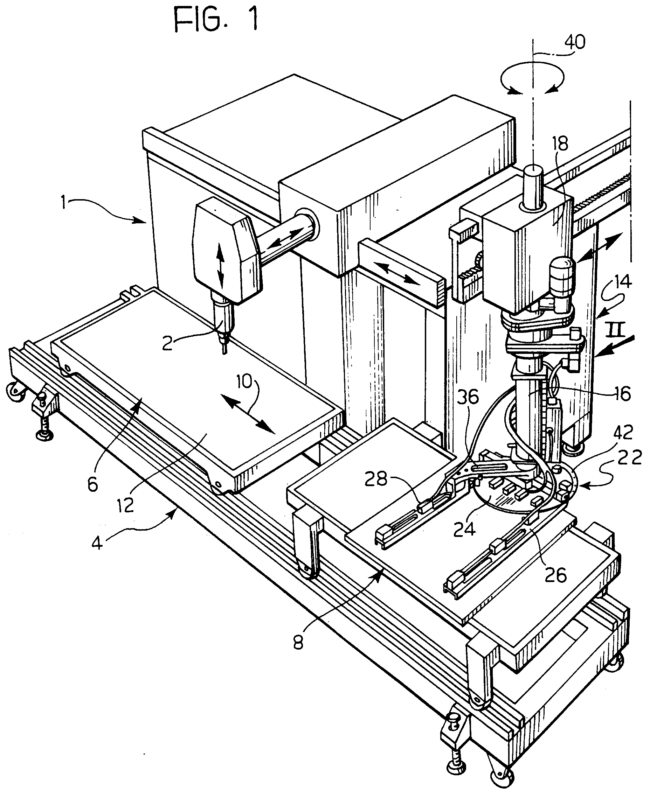

In Figure 1 a laser welding and cutting machine of known type is indicated 1 and has a laser focusing head 2 movable along two or three mutually perpendicular axes.

A piece-carrying unit indicated 4 has two support tables 6, 8 movable in the directions indicated by the double arrow 10. In the configuration illustrated in Figure 1, the support table 6 carrying a metal sheet 12 is located in the working area facing the laser machine 1 and the table 8 is in the loading and unloading area for the pieces. When the laser machine 1 has finished cutting the metal sheet 12 carried by the table 6, the tables 6, 8 change places and the table 6, with the cut pieces, becomes located in the unloading area while the table 8 with a new sheet of metal to be worked becomes positioned in the working area.

At the loading and unloading station for the pieces there is a manipulator 14 including a vertical, rotatable column 16 carried by a slide 18 which is movable horizontally along two cartesian or polar axes.

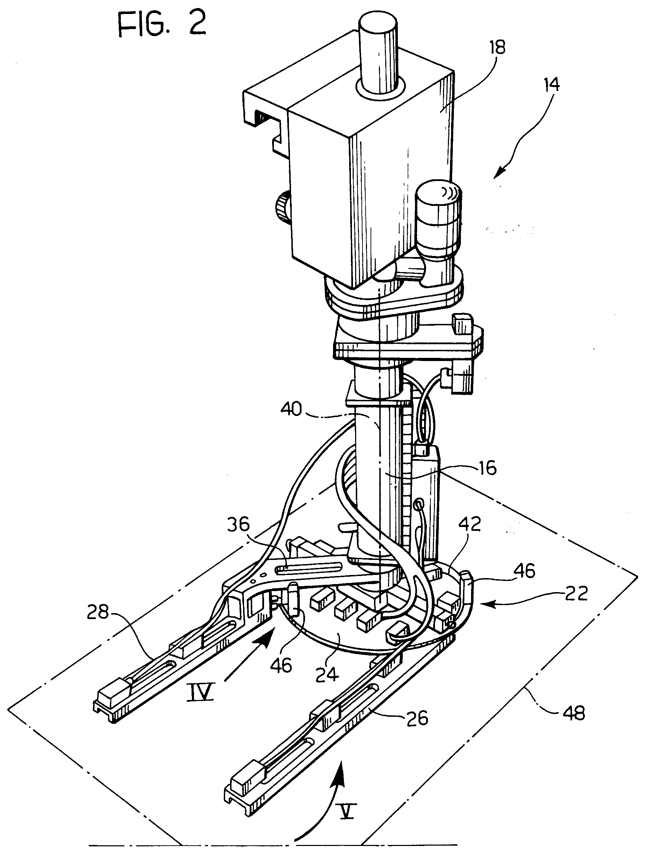

At the lower end of the rotatable column 16 is a pick-up device 22 which is illustrated in greater detail in Figures 2 to 6. The pick-up device 22 includes a base 24 with a circular profile from which projects a pair of arms 26, 28. Preferably the arms 26, 28 project to a greater extent than the diameter of the base 24. In a practical embodiment of the device 22, the arms 26, 28 have a length of about 700mm and the base 24 has a diameter of about 500mm.

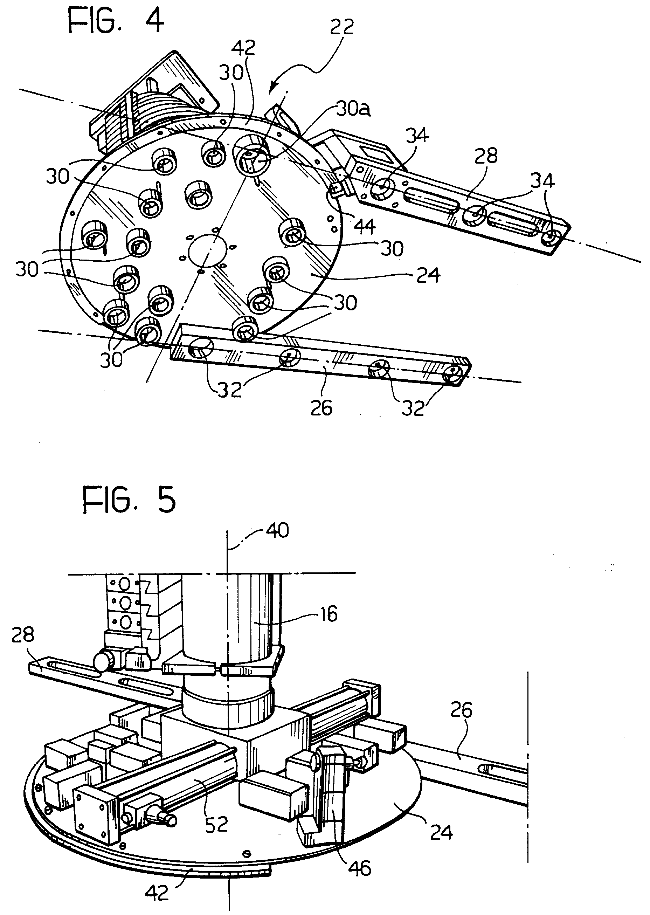

As is seen in Figure 4, the base 30 has a first group of pick-up sucker members indicated 30 each constituted, in known manner, by a resilient wall defining a chamber connected to suction means. The arms 26, 28 have respective groups of pick-up members indicated 32 and 34. All the pick-up members 30, 32 and 34 are located in the same plane which constitutes the pick-up plane of the pick-up device 22.

In the embodiment illustrated in the drawings, the arm 26 is fixed to the base 24 and extends tangentially of the profile of the latter.

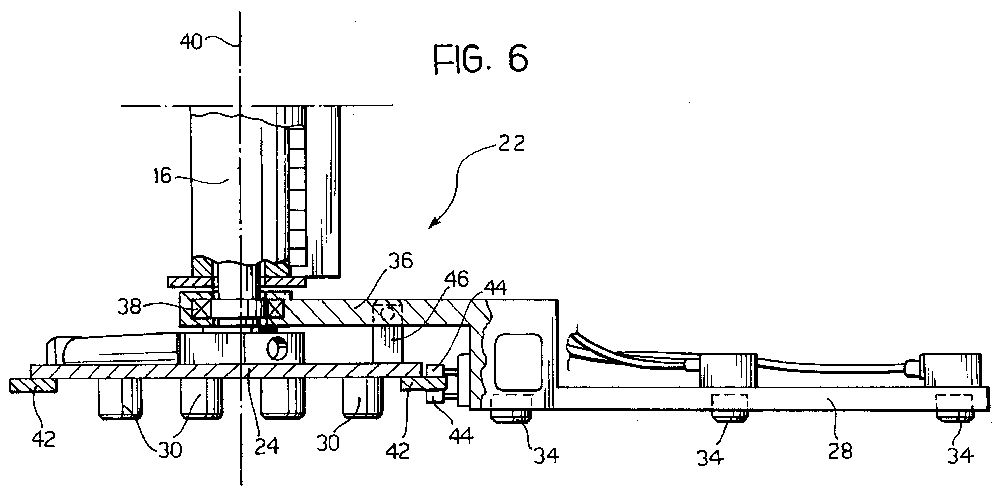

The arm 28 has an extension 36 which, as seen in greater detail in Figure 6, is connected rotatably to the column 16 by a bearing 38. Hence, the arm 28 is rotatable about the axis 40 of the column 16 which is coincident with the axis of the circular base 24.

With reference to Figures 4 and 6, the base 24 has a guide 42 which projects slightly beyond the edge of the base 24 and extends through an angle of more than 180⁰. The movable arm 28 has a pair of idle support rollers 44 which engage opposite sides of the guide 42.

The base 24 has a pair of travel limit stops 46 which define two operative positions of the movable arm 28. In the first of these operative positions - illustrated in Figures 1, 2 and 4 - the movable arm 28 extends parallel to the fixed arm 26 and is spaced from the latter by a distance substantially equal to the diameter of the circular base 24. In this configuration, the device 22 may pick up large rectangular pieces of sheet metal such as those indicated at 48 in Figure 2.

The pick-up members 30, 32 and 34 may be actuated selectively by respective solenoid valves controlled by a conventional control unit. This enables the geometry of the pick-up area of the device 22 to be varied, this pick-up area being defined by the curve circumscribing the activated pick-up members.

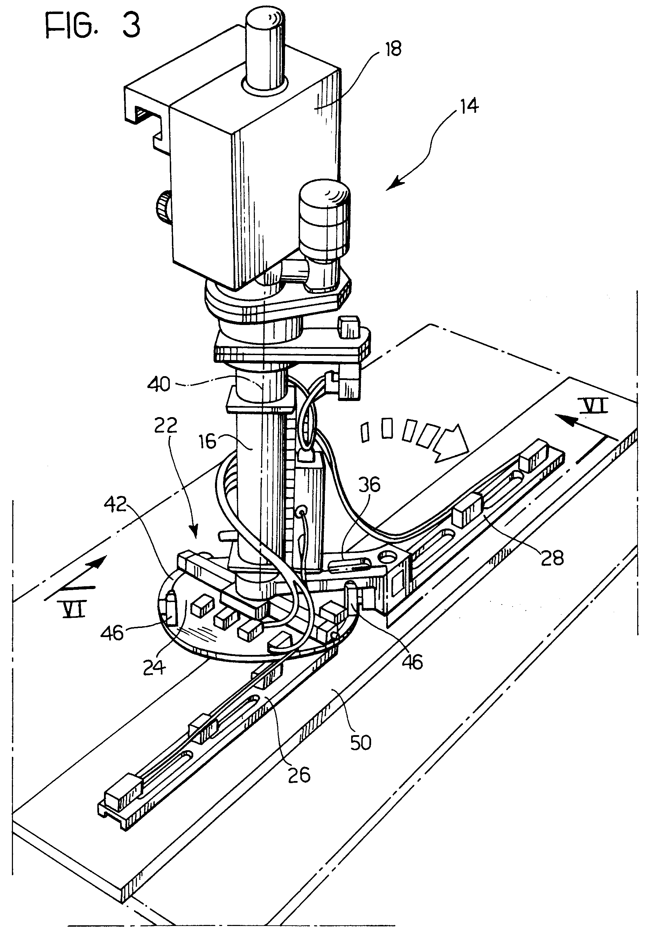

In the second working configuration of the device 22 - illustrated in Figures 3 and 5 - the movable arm 28 is aligned with the fixed arm 26 by virtue of a 180⁰ rotation about the axis 40 of the vertical column 16. In this configuration, the device 22 may pick up strip-shaped pieces, such as that indicated at 50 in Figure 3. With reference to Figure 4, the base 24 has a pick-up member 30a which has a larger surface than that of the other pick-up members 30, 32 and 34 and which is thus able to develop a greater pick-up force. The pick-up member 30a is disposed on a line perpendicular to the direction of alignment of the arms 26, 28 in their second operative position. The greater suction force achieved by the pick-up member 30a, acting at the greatest possible distance from the aligned arms 26, 28, enables wider strips to be gripped and even rectangular sheets with large dimensions as indicated by the chain line in Figure 3. In the first working configuration (that in which the arms 26, 28 are parallel to each other) the pick-up member 30a is aligned with the pick-up members 34 of the movable arm 28 (see Figure 4) so as easily to be able to take up short strips without rotation of the arm 28.

The rotation of the movable arm 28 is driven by a linear actuator 52 (Figure 5) which is connected to the arm 28 by a rack device (not illustrated) or like mechanism which is able to convert the rectilinear movement of the actuator 52 into a rotary movement of the arm 28.

Naturally the forms of embodiment of the device of the invention could be varied widely without thereby departing from the scope of the present invention. For example, the base 22 could have a quadrilateral shape or, more generally, a polygonal shape and the movable arm 28 could be articulated in correspondence with one side of the quadrilateral shaped base. The base 22 could also be provided with two or more movable arms each of which could take up several operative positions.

## Claims

1. A device for picking up plate-like pieces, particularly for unloading pieces of sheet metal cut by a laser machine, including a plurality of pick-up sucker members (30, 32, 34) connected to suction means, at least one of the pick-up members being carried by a movable part (28) which is able to assume at least a first operative position and a second operative position, which positions correspond to respective forms of the curves circumscribing the pick-up members (30, 34), characterised in that it includes a base (24) provided with a first group of pick-up members (30) defining the pick-up plane of the device and in that the base (24) carries at least one pair of projecting arms (26, 28) provided with a second group and a third group of pick-up members (32, 34), at least one of the arms (28) being movable between two operative positions in the first of which the two arms (26, 28) are substantially parallel and in the second of which the arms (26, 28) are substantially aligned with each other.

2. A device according to Claim 1, characterised in that the base (24) has a circular profile and in that, in the first operative position, the two arms (26, 28) are spaced apart by a distance substantially equal to the diameter of the base (24).

3. A device according to Claim 2, characterised in that a first of the arms (26) is fixed and extends in a direction tangential of the base (24).

4. A device according to Claim 3, characterised in that the second of the arms (28) is rotatable about an axis (40) perpendicular to the pick-up plane of the device (22).

5. A device according to Claim 2, characterised in that each of the arms (26, 28) extends beyond the periphery of the base (24) in the direction of its longitudinal axis by a distance greater than the diameter of the base (24).

6. A device according to Claim 1, characterised in that the base (24) is supported by a column (16) perpendicular to the base plane of the device (22), the movable arm (28) being connected rotatably to the column (16) and having a pair of support rollers (44) which engage a circular guide (42) located around the edge of the base (24).

7. A device according to Claim 6, characterised in that the base (24) has a linear actuator (52) which can drive a rotation of the movable arm (28) through 180⁰.

8. A device according to Claim 1, characterised in that the first series of pick-up members (30) includes a pick-up member (30a) which, in the configuration in which the two arms (26, 28) are substantially aligned with each other, is located in a position diametrally opposite the arms (26, 28) on a line substantially coincident with the axis of symmetry of the aligned arms.

9. A device according to Claim 8, characterised in that the said pick-up member (30a) located on the line perpendicular to the direction of alignment of the arms (26, 28) has a greater pick-up capacity than that of the remaining pick-up members (30a) of the first group.

10. A device according to Claim 8, characterised in that, in the operative position in which the two arms (26, 28) are substantially parallel to each other, the said pick-up member (30a) situated on the axis of symmetry of the aligned arms is substantially aligned with the pick-up members (34) of the movable arm (28).

11. A device according to Claim 1, characterised in that the base (24) is rotatable about an axis (40) perpendicular to the said pick-up plane in order to assume a multiplicity or an infinite number of angular positions so as to be oriented suitably in accordance with the shape and orientation of the piece to be picked up.

12. A device according to Claim 1, characterised in that the pick-up members (30, 32, 34) are connected to respective valves operated by a control unit arranged to vary the geometry of the curve circumscribing the pick-up members and activated in dependence on the shape and dimensions of the pieces to be picked up.
